# EUROPÄISCHE PATENTSCHRIFT

(11) **EP 3 730 546 B1**
(45) Veröffentlichungstag und Bekanntmachung des Hinweises auf die Patenterteilung: **12.07.2023**
(21) Anmeldenummer: 20166358.0
(22) Anmeldetag: 27.03.2020
(51) Int. Cl.: C08K 5/14, C08F 4/34

(54) **ORGANISCHE PEROXIDEMULSION UND VERFAHREN ZU DEREN HERSTELLUNG UND DEREN VERWENDUNG**
ORGANIC PEROXIDE EMULSION AND METHOD FOR THEIR PREPARATION AND THEIR USE
ÉMULSION DE PEROXYDE ORGANIQUE ET SON PROCÉDÉ DE FABRICATION ET SON UTILISATION

(30) Priorität: 17.04.2019 DE 102019110214
(43) Veröffentlichungstag der Anmeldung: 28.10.2020
(73) Patentinhaber: Pergan GmbH, 46395 Bocholt (DE)
(72) Erfinder: WORMLAND, Bernhard, 46395 Bocholt (DE); VON ZADOW, Edgar, 46342 Velen (DE)
(74) Vertreter: Nobbe, Matthias

(56) Entgegenhaltungen:
- WO-A1-00/42078
- WO-A1-99/31194
- WO-A1-2014/044949
- WO-A1-2014/044961

## Beschreibung

Die Erfindung betrifft ein Verfahren zur Herstellung wässriger Emulsionen von organischen Peroxiden wie Diacylperoxiden, Peroxyestern oder Peroxydicarbonaten ohne Verwendung von Schutzkolloiden, die bis -20 °C flüssig sind und kein Methanol als Gefrierschutzkomponente enthalten sowie die nach dem Verfahren erhaltenen Peroxidemulsionen und deren Verwendung.

Emulsionen organischer Peroxide sind im Stand der Technik bekannt. Dabei enthalten die bislang für die Suspensions- oder Emulsionspolymerisation, wie z. B. zur Herstellung von PVC, verwendeten wässrigen organischen Peroxidemulsionen als Formulierungskomponenten neben nichtionischen Tensiden und Gefrierschutzmitteln in der Regel auch lager- bzw. tröpfchenstabilisierende Schutzkolloide.

So betrifft die WO 02076 936 eine wässrige Emulsion mit einem organischen Peroxid, die ein Frostschutzmittel, ein Schutzkolloid und einen Weichmacher enthält. Der Weichmacher ist dabei ein längerkettiger Ester.

Aus der EP 998456 sind wässrige Emulsionen von organischen Peroxiden bekannt, die einen Gehalt an Schutzkolloid, einem nichtionischen Tensid und einem Frostschutzmittel aufweisen, wobei das Schutzkolloid ein teilweise verseiftes Polyvinylacetat ist.

Aus der EP 1501875 sind hochkonzentrierte stabile und sichere Diperoxid- und Peroxydicarbonat-Emulsionen bekannt, die sich durch einen Gehalt an einem teilweise verseiften Polyvinylacetat, einem oder mehreren nichtionischen Tensiden und einem oder mehreren Gefrierschutzmitteln auszeichnet.

Flüssige Peroxidformulierungen umfassen insbesondere wässrige, organische Peroxide enthaltende Emulsionen bzw. Dispersionen. Solche Emulsionen oder Dispersionen enthalten üblicherweise wenigstens ein organisches Peroxid, Wasser, Antifrostmittel, chlorierte Kohlenwasserstoffe und zumeist oberflächenaktive Mittel und/oder Schutzkolloide.

In den so bekannten Emulsionen werden diese Schutzkolloide häufig in Form von Polyvinylalkohol geeigneter Hydrolysegrade, Xanthan-Gum, Cellulosederivate, Alginate usw. zur Stabilisierung des emulgierten organischen Peroxids eingesetzt.

Die in den Emulsionen zur Verwendung kommenden Diacylperoxide, Peroxyester und Peroxydicarbonate sind thermisch labile Verbindungen, die in emulgierter Form mit Peroxid-Tröpfchen mit einer Größe von weniger als 5 µm sicher zu handhaben sind. Entsprechend ist es notwendig, die zu Beginn der Herstellung erhaltene Größe der Tröpfchen über eine Lagerdauer von mind. 12 Wochen zu stabilisieren. Ein zu vermeidendes Anwachsen des Tröpfchenvolumens verbessert die Lagerstabilität ohne Veränderung der Anfangsviskosität und verhindert die Bildung von sog. Fischaugen im Polymer durch Bildung gröberer PVC-Partikel während des Polymerisationsverfahrens.

Zur Herstellung der geforderten Peroxid-Emulsionen werden als weitere Bestandteile Emulgatoren und Gefrierschutzmittel eingesetzt.

Geeignete nichtionische Emulgatoren bzw. Tenside sind z. B. Fettalkohole und ethoxylierte Fettsäuren sowie Alkylenoxid-Blockcopolymere.

Bei der Herstellung solcher Peroxidemulsionen weisen die verwendeten und bevorzugten Schutzkolloide in Form von PVA bestimmte Hydrolysegrade auf. PVA mit Hydrolysegraden < 45 % sind nicht wasserlöslich und solche mit > 68 % führen zu Emulsionen mit zu hoher Viskosität.

Angestrebt werden im Stand der Technik Emulsionen, die über eine Lagerzeit von mind. 12 Wochen bei -10 bis -20 °C ohne Veränderung der Tröpfchengröße von möglichst < 2 µm homogen bleiben und bei denen die gemessenen Auslaufzeiten mit einem Auslaufbecher nach DIN EN ISO 2431, 6 mm, bei -10 °C die Zeit von 15 s nicht überschreiten.

Dementsprechend ist die Verwendung eines oder mehrerer Gefrierschutzmittel erforderlich, damit die wässrigen Emulsionen bei den erforderlichen Lager- und Verarbeitungstemperaturen von -10 bis -20°C fließ- und pumpfähig sind und nicht gefrieren. Geeignete Gefrierschutzmittel sind Alkohole wie z. B. Methanol, Ethanol, Propanole, Glykole und Glycerin. Im Stand der Technik ist aus der US 2015/0232590A1 eine Peroxidemulsion ohne Schutzkolloid bereits bekannt, allerdings wird in diesen gefrierstabilen Peroxidemulsionen Methanol in Kombination mit Propylenglykol und Polyethylenglykol-Blockpolymeren als Emulgatoren verwendet, was im Hinblick auf die Toxizität von Methanol nachteilig und zu vermeiden ist.

Aufgabe der Erfindung ist daher die Bereitstellung einer Peroxidemulsion mit einer guten Lagerstabilität, die ohne Schutzkolloid und ohne toxische Bestandteile die nach DIN EN ISO 2431 mit einer Düsengröße von 6 mm gemessenen Auslaufzeiten bei -10 °C von 15 s nicht überschreitet.

Überraschenderweise wurde nun gefunden, dass die Herstellung einer wässrigen organischen Peroxidemulsion im Vergleich zum Stand der Technik auch ohne Methanol unter Verwendung von geeigneten Emulgatoren zu den oben genannten Emulsionseigenschaften führt, wobei die Peroxidemulsion 40 bis 70 %, vorzugsweise 50 bis 60 %, an Peroxid enthält, über eine Lagerzeit von mind. 12 Wochen bei -10 bis -20 °C ohne Veränderung der Tröpfchengröße von möglichst < 2 µm homogen bleibt und die mit einem Auslaufbecher nach DIN EN ISO 2431 mit einer Düsengröße von 6 mm gemessenen Auslaufzeiten bei -10 °C sollten 15 s nicht überschreiten.

Die Erfinder haben zunächst festgestellt, dass bei der in der US 2015/0232590A1 beschriebenen Peroxidemulsion mit Methanol als Gefrierschutz in Kombination mit Propylenglykol und Polyethylenglykol-Blockpolymeren als Emulgatoren der Austausch von Methanol durch einen anderen Alkohol wie Ethanol dazu führt, dass diese Emulsion nicht mehr langzeitstabil ist.

Die Erfinder konnten dahingegen im Rahmen ihrer Untersuchungen herausfinden, daß der Einsatz von Blockpolymeren mit endständigen Alkylgruppen, wie z.B. des Alkyl-EO/PO-Copolymers Tergitol XJ (DOW), auch ohne Verwendung von Schutzkolloiden in Kombination von Ethanol mit Triethylenglykol (TEG) als Gefrierschutzmittelkombination eine anforderungsgerechte Peroxidemulsion ergibt. Solche Formulierungen sind im Stand der Technik nicht bekannt.

Die gemäß dieser Erfindung neu entwickelten Peroxidemulsionen zeigen im Vergleich zu konventionellen Formulierungen bei der Polymerisation von ethylenisch ungesättigten Monomeren, insbesondere PVC, keine Qualitätsunterschiede bei den erhaltenen Polymeren.

Die Erfindung ist daher gerichtet auf eine wässrige, methanolfreie und schutzkolloidfreie stabile Emulsion, die bei -20 °C flüssig ist, mit einem Gehalt an: 40% bis 70 Gew.-% eines organischen Peroxids, vorzugsweise ausgewählt aus Diacylperoxiden, Peroxyestern und Peroxydicarbonaten oder eines Gemisches mehrerer organischer Peroxide,
10 bis 25 Gew.-% eines Gemisches aus Ethanol und Triethylenglykol in einem Gewichtsverhältnis von Ethanol zu Triethylenglykol von 2,5 bis 0,8,
1 bis 5 Gew.-% an einem oder mehreren Alkylenoxid-Blockcopolymeren mit endständigen Alkylgruppen als Tensid, und
Wasser auf 100 Gew.-%.

Erfindungsgemäß ist somit eine wässrige stabile Peroxidemulsion erhältlich, die ohne Zusatz von Schutzkolloiden in Form von Polyvinylalkohol, Xanthan-Gum, Cellulosederivate, Alginate u.a. zugänglich ist und dennoch eine verbesserte Stabilität aufweist.

Als organische Peroxide können erfindungsgemäß verwendet werden: Peroxyester, Peroxycarbonate, Peroxydicarbonate und Diacylperoxide, vorzugsweise Diacylperoxide, Peroxyester und Peroxydicarbonate.

Vorzugsweise sind genannt: Cumylperoxyneodecanoat, 1,1,3,3-Tetramethylbutylperoxyneodecanoat, tert-Amyl-peroxyneodecanoat, tert-Butyl-peroxyneodecanoat, tert-Butyl-peroxyneoheptanoat, Di(2-ethylhexyl)-peroxydicarbonat und Di(3,5,5-trimethylhexanoyl)peroxid.

Die erfindungsgemäßen wässrigen, organischen Peroxide enthaltenden Emulsionen oder Dispersionen enthalten besonders 45 bis 60 Gew.-% an organischem Peroxid bezogen auf die gesamte Emulsion oder Dispersion.

Erfindungsgemäß ist die wässrige, schutzkolloidfreie stabile Emulsion mit einem Gehalt 16 - 22 Gew.-%, eines Gemisches aus Ethanol und Triethylenglykol, in einem Gewichtsverhältnis von Ethanol zu Triethylenglykol von 2,5 bis 0,8, bevorzugt von 2,2 bis 1,0 vorteilhaft.

Dabei kann der Gehalt an Tensid bevorzugt 1 bis 3 Gew.-% eines nichtionischen Tensids oder eines Gemisches mehrerer nichtionischer Tenside betragen.

Erfindungsgemäß sind alle Angaben in Gew.-% auf das Gewicht der fertigen Zusammensetzung bezogen.

Das nichtionische Tensid ist aus der Gruppe von Fettalkoholalkoxylaten, alkoxylierten Fettsäuren, Alkylenoxid-Blockcopolymeren oder Mischungen davon, vorzugsweise Alkylenoxid-Blockcopolymeren mit endständigen Alkylgruppen, wie z.B. Alkyl-EO/PO-Copolymeren, ausgewählt.

Die erfindungsgemäßen Peroxidformulierungen können weitere Zusatzstoffe wie UV-Stabilisatoren, pH-Regulatoren und, soweit erwünscht, Biozide enthalten. Diese genannten Zusatzstoffe sind dem Fachmann bekannt und werden den Peroxidformulierungen in üblichen Mengen zugesetzt.

Die Herstellung der erfindungsgemäßen Emulsion kann durch Homogenisierung der Komponenten mittels konventioneller Rührtechnik erfolgen. Eine energische Durchmischung unter Verwendung von Feindispergiergeräten, wie z.B. Zahnkolloidmühlen oder Ultra-Turrax-Dispergatoren mit hohen Scherkräften bei 9500 UpM, wie in der US 2015/0232590A1 beschrieben, ist nicht erforderlich. Dies ist insbesondere vorteilhaft, da bei den thermisch labilen Peroxidverbindungen durch den deutlich geringeren Wärmeeintrag beim Homogenisieren eine höhere Prozesssicherheit erzielt wird.

Überraschenderweise wurde auch gefunden, dass die erhaltenen erfindungsgemäßen Peroxidemulsionen wie oben aufgeführt, bei Abkühlung von -10°C auf -15°C eine Abnahme der Auslaufzeit bzw. Viskosität zeigen und somit die Sicherheit bei der Handhabung und Lagerung der Peroxidemulsionen weiter erhöht wird.

Die Erfindung wird durch die Abbildungen und die folgenden Ausführungsbeispiele weiter erläutert.

Dabei zeigen:

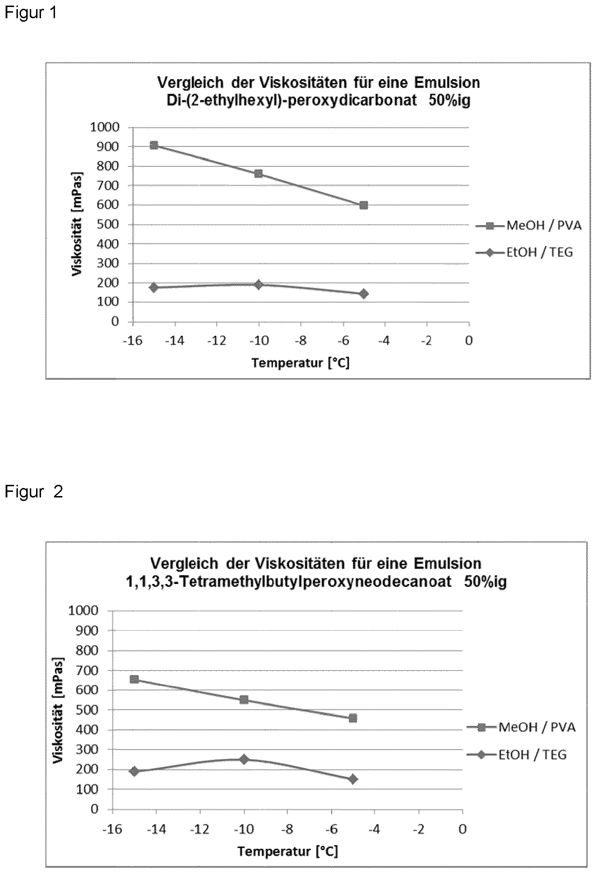

Abbildung 1 den Vergleich der Viskositäten für eine Emulsion von Di-(2-ethylhexyl)-peroxydicarbonat in einer erfindungsgemäßen Zusammensetzung im Vergleich mit einer Emulsion aus dem Stand der Technik;
Abbildung 2 den Vergleich der Viskositäten für eine Emulsion von 1,1,3,3-Tetramethylbutylperoxyneodecanoat in einer erfindungsgemäßen Zusammensetzung im Vergleich mit einer Emulsion aus dem Stand der Technik.

Aus den Abbildungen ist ersichtlich, dass die aus dem Stand der Technik bekannten Emulsionen bei Abkühlung von -10°C auf niedrigere Temperaturen eine steigende Viskosität zeigen, während die erfindungsgemäßen Emulsionen überraschenderweise eine Abnahme der Viskosität zeigen.

### Ausführungsbeispiele

### Beispiel 1

Eine wässrige 60 %ige Emulsion von Di-(2-ethylhexyl)-peroxydicarbonat wurde hergestellt, indem in eine auf -10 °C gekühlte Mischung aus 16,0 g Ethanol, 16,0 g Triethylenglykol, 3,0 g Tergitol XJ (Alkyl EO/PO Copolymer der DOW) und 43,0 g Wasser 122,0 g Di-(2-ethylhexyl)-peroxydicarbonat 98 %ig mittels Flügelrührer 10 min lang bei 1000 rpm eingemischt wurde, wobei die Temperatur mittels Außenkühlung auf -10 °C gehalten wurde.

Die mittlere Tröpfchengröße des Peroxids lag bei < 1 µm und die Auslaufzeit bei 14 s mit einer Lagerstabilität (-15 °C) von > 12 Wochen bei unverändertem Tröpfchenvolumen.

### Beispiel 2

Eine wässrige 50 %ige Emulsion von Cumylperoxyneodecanoat wurde hergestellt, indem in eine auf -10 °C gekühlte Mischung aus 20,0 g Ethanol, 10,0 g Triethylenglykol, 6,0 g Tergitol XJ und 51,6 g Wasser 112,4 g Cumylperoxyneodecanoat 89 %ig unter gleichen Bedingungen wie unter Beispiel 1 beschrieben homogen eingemischt wurde.

Die mittlere Tröpfchengröße des Peroxids lag bei < 1 µm und die Auslaufzeit bei 10 s mit einer Lagerstabilität (-15 °C) von > 12 Wochen bei unverändertem Tröpfchenvolumen.

### Beispiel 3

Eine wässrige 50 %ige Emulsion von 1,1,3,3-Tetramethylbutylperoxyneodecanoat wurde hergestellt, indem in eine auf -10 °C gekühlte Mischung aus 20,0 g Ethanol, 20,0 g Triethylenglykol, 6,0 g Tergitol XJ und 41,0 g Wasser 113,0 g 1,1,3,3-Tetramethylbutylperoxyneodecanoat 88,5 %ig unter gleichen Bedingungen wie unter Beispiel 1 beschrieben eingemischt wurde.

Die mittlere Tröpfchengröße des Peroxids lag bei < 1 µm und die Auslaufzeit bei 12 s mit einer Lagerstabilität (-15 °C) von > 12 Wochen bei unverändertem Tröpfchenvolumen.

### Beispiel 4

Beispiel 3 wurde wiederholt, jedoch wurde anstelle des 1,1,3,3-Tetramethylbutylperoxyneodecanoates unter Anpassung der Menge an Wasser 99,0 %iges Di-(3,5,5-trimethylhexanoyl)-peroxid verwendet.

Die mittlere Tröpfchengröße des Peroxids lag bei < 1 µm und die Auslaufzeit bei 11 s mit einer Lagerstabilität (-15 °C) von > 12 Wochen bei unverändertem Tröpfchenvolumen.

### Beispiel 5

Eine wässrige 50 %ige Emulsion von tert.-Butylperoxyneodecanoat wurde hergestellt, indem in eine auf -10 °C gekühlte Mischung aus 22,0 g Ethanol, 22,0 g Triethylenglykol, 8,8 g Tergitol XJ und 52,6 g Wasser 114,6 g tert.-Butylperoxyneodecanoat 96 %ig unter gleichen Bedingungen wie unter Beispiel 1 beschrieben eingemischt wurde.

Die mittlere Tröpfchengröße des Peroxids lag bei < 1 µm und die Auslaufzeit bei 13 s mit einer Lagerstabilität (-15 °C) von > 12 Wochen bei unverändertem Tröpfchenvolumen.

### Beispiel 6

Eine wässrige 50 %ige Emulsion von tert.-Butylperoxyneoheptanoat wurde hergestellt, indem in eine auf -10 °C gekühlte Mischung aus 18,0 g Ethanol, 18,0 g Triethylenglykol, 5,4 g Tergitol XJ und 48,6 g Wasser 90,0 g tert.-Butylperoxyneoheptanoat 99,9 %ig unter gleichen Bedingungen wie unter Beispiel 1 beschrieben eingemischt wurde.

Die mittlere Tröpfchengröße des Peroxids lag bei < 1 µm und die Auslaufzeit bei 11 s mit einer Lagerstabilität (-15 °C) von > 12 Wochen bei unverändertem Tröpfchenvolumen.

### Beispiel 7

Eine wässrige 50 %ige Emulsion von Di-(2-ethylhexyl)-peroxydicarbonat wurde hergestellt, indem in eine auf -10 °C gekühlte Mischung aus 25,5 g Ethanol, 25,5 g Triethylenglykol, 7,7 g Tergitol XJ und 67,5 g Wasser 128,8 g Di-(2-ethylhexyl)-peroxydicarbonat 99 %ig unter gleichen Bedingungen wie unter Beispiel 1 beschrieben eingemischt wurde.

Die mittlere Tröpfchengröße des Peroxids lag bei < 1 µm und die Auslaufzeit bei 12 s mit einer Lagerstabilität (-15 °C) von > 12 Wochen bei unverändertem Tröpfchenvolumen.

### Beispiel 8

Eine wässrige 50 %ige Emulsion von Di-(2-ethylhexyl)-peroxydicarbonat wurde hergestellt, indem in eine auf -10 °C gekühlte Mischung aus 24,0 g Ethanol, 24,0 g Diethylenglykol, 7,2 g Tergitol XJ und 63,6 g Wasser 121,2 g Di-(2-ethylhexyl)-peroxydicarbonat 99 %ig unter gleichen Bedingungen wie unter Beispiel 1 beschrieben eingemischt wurde.

Die mittlere Tröpfchengröße des Peroxids lag bei < 1 µm und die Auslaufzeit bei 12 s mit einer Lagerstabilität (-15 °C) von > 12 Wochen bei unverändertem Tröpfchenvolumen.

### Vergleichsbeispiel 1

Beispiel 3 wurde wiederholt, jedoch wurden anstelle von Ethanol und Triethylenglykol als Gefrierschutzmittel Methanol und Triethylenglykol verwendet und unter den gleichen Bedingungen wie unter Beispiel 1 beschrieben homogenisiert.

Die mittlere Tröpfchengröße des Peroxids lag zu Beginn bei <2 µm und die Auslaufzeit bei 15 s mit einer Lagerstabilität (-15 °C) von < 8 Wochen. Nach dieser Zeit war die Emulsion in 2 Phasen getrennt.

## Patentansprüche

1. Wässrige, methanolfreie und schutzkolloidfreie stabile Emulsion, die bei -20 °C flüssig ist, mit einem Gehalt an:
40% bis 70 Gew.-% eines organischen Peroxids, vorzugsweise ausgewählt aus Diacylperoxiden, Peroxyestern und Peroxydicarbonaten oder eines Gemisches mehrerer organischer Peroxide,
10 bis 25 Gew.-% eines Gemisches aus Ethanol und Triethylenglykol in einem Gewichtsverhältnis von Ethanol zu Triethylenglykol von 2,5 bis 0,8,
1 bis 5 Gew.-% an einem oder mehreren Alkylenoxid-Blockcopolymeren mit endständigen Alkylgruppen als Tensid und
Wasser auf 100 Gew.-%.

2. Wässrige, schutzkolloidfreie stabile Emulsion nach Anspruch 1, mit einem Gehalt an 16 - 22 Gew.-% eines Gemisches aus Ethanol und Triethylenglykol, in einem Gewichtsverhältnis von Ethanol zu Triethylenglykol von 2,5 bis 0,8, bevorzugt von 2,2 bis 1,0.

3. Wässrige, schutzkolloidfreie stabile Emulsion nach Anspruch 1 oder 2, mit einem Gehalt an 1 bis 3 Gew.-%, eines nichtionischen Tensids.

4. Verfahren zur Herstellung einer wässrigen, schutzkolloidfreien stabilen Emulsion nach einem der Patentansprüche 1 bis 3, bei dem die Komponenten mittels konventioneller Rührtechnik, vorzugsweise ohne Verwendung von Feindispergiergeräten mit hohen Scherkräften, zu einer stabilen Emulsion homogenisiert werden.

5. Verwendung einer Emulsion nach einem der Ansprüche 1 bis 3 für die Polymerisation von ethylenisch ungesättigten Monomeren, insbesondere PVC.

## Claims

1. Aqueous, methanol-free and protective colloid-free stable emulsion which is liquid at -20 °C, having a content of:
40% to 70% by weight of an organic peroxide, preferably selected from diacyl peroxides, peroxy esters and peroxydicarbonates or of a mixture of several organic peroxides,
10 to 25% by weight of a mixture of ethanol and triethylene glycol in a weight ratio of ethanol to triethylene glycol of 2.5 to 0.8,
1 to 5% by weight of one or more alkylene oxide block copolymers having terminal alkyl groups as surfactant, and
water to 100% by weight.

2. Aqueous protective colloid-free stable emulsion according to claim 1, having a content of containing 16-22 % by weight of a mixture of ethanol and triethylene glycol in a weight ratio of ethanol to triethylene glycol of 2.5 to 0.8, preferably of 2.2 to 1.0.

3. Aqueous, protective colloid-free stable emulsion according to claim 1 or 2, containing from 1 to 3% by weight of a nonionic surfactant.

4. Process for the preparation of an aqueous, protective-colloid-free stable emulsion according to any one of claims 1 to 3, in which the components are homogenized to a stable emulsion by means of conventional stirring technology, preferably without the use of fine dispersing equipment with high shear forces.

5. Use of an emulsion according to any one of claims 1 to 3 for the polymerization of ethylenically unsaturated monomers, in particular PVC.

## Revendications

1. Émulsion aqueuse stable, exempte de méthanol et de colloïdes de protection, qui est liquide à -20 °C, comportant une teneur de :
40 % à 70 % en poids d'un peroxyde organique, choisi préférentiellement parmi les peroxydes de diacyle, les peroxyesters et les peroxydicarbonates, ou d'un mélange de plusieurs peroxydes organiques,
10 à 25 % en poids d'un mélange d'éthanol et de triéthylèneglycol, le rapport de poids entre l'éthanol et le triéthylèneglycol étant compris entre 2,5 et 0,8,
1 à 5 % en poids d'un ou de plusieurs copolymères en blocs d'oxyde d'alkylène pourvus de groupes d'alkyle terminaux, en tant qu'agent tensioactif, et
de l'eau pour atteindre les 100 % en poids.

2. Émulsion aqueuse stable, exempte de colloïdes de protection, selon la revendication 1, comportant une teneur de 16 à 22 % en poids d'un mélange d'éthanol et de triéthylèneglycol, le rapport de poids entre l'éthanol et le triéthylèneglycol étant compris entre 2,5 et 0,8, préférentiellement entre 2,2 et 1,0.

3. Émulsion aqueuse stable, exempte de colloïdes de protection, selon les revendications 1 ou 2, comportant une teneur de 1 à 3 % en poids d'un agent tensioactif non-ionique.

4. Procédé permettant de préparer une émulsion aqueuse stable, exempte de colloïdes de protection, selon l'une des revendications 1 à 3, consistant à homogénéiser les constituants au moyen de technologies conventionnelles d'agitation, de préférence sans mise en oeuvre de appareils de microdispersion développant d'importantes forces de cisaillement, de manière à obtenir une émulsion stable.

5. Utilisation d'une émulsion selon l'une des revendications 1 à 3 pour la polymérisation de monomères éthyléniquement insaturés, notamment dans le cas du PVC.
